# EUROPÄISCHE PATENTSCHRIFT

(11) **EP 0 709 270 B1**
(45) Veröffentlichungstag und Bekanntmachung des Hinweises auf die Patenterteilung: **09.09.1998**
(21) Anmeldenummer: 95116700.6
(22) Anmeldetag: 24.10.1995
(51) Int. Cl.: B61F 5/24, F16F 9/18, B60H 1/00

(54) **Luftführung in einem Verteilerkasten**
Air circulation in a distribution box
Distribution d'air dans un boîtier de guidage d'air

(30) Priorität: 27.10.1994 DE 4438133
(43) Veröffentlichungstag der Anmeldung: 01.05.1996
(73) Patentinhaber: VALEO CLIMATISATION, 78320 La Verrière (FR)
(72) Erfinder: Ernst, Alexander, D-70734 Fellbach (DE)
(74) Vertreter: COHAUSZ HANNIG DAWIDOWICZ & PARTNER

(56) Entgegenhaltungen:
- EP-A- 0 212 306
- DE-A- 3 619 935
- DE-A- 4 022 932
- FR-A- 2 562 845
- US-A- 4 899 809

## Beschreibung

Die Erfindung betrifft einen Verteilerkasten für eine Warmluftheizung oder eine Klimaanlage eines Kfz mit einem Kaltlufteinlaß, von dem die Kaltluft zu einem Absperrorgan, insbesondere einer Klappe geführt ist, das die Kaltluft in zwei Luftströme teilt, von denen einer direkt zu einer Mischkammer und der andere zu einem Wärmetauscher geführt ist, der die Kaltluft anwärmt, wobei die angewärmte Luft hinter dem Wärmetauscher in die Mischkammer geführt ist.

Es sind beispielsweise aus der DE 40 22 932 Luftverteilerkästen für Kraftfahrzeuge bekannt, in denen der eintretende Luftstrom durch eine Drehklappe in zwei Luftströme aufgeteilt wird, von denen einer durch einen Wärmetauscher angewärmt und danach mit dem zweiten Luftstrom in einer Mischkammer zusammengeführt wird. Die so gemischte Luft wird mit der vom Bediener eingestellten Temperatur durch mehrere einzeln absperrbare Austrittsöffnungen und Ausströmer in das Fahrzeuginnere verteilt. Solche Verteilerkästen benötigen einen verhältnismäßig großen Bauraum.

Aus der DE 36 19 935 ist ein Verteilerkasten für Kraftwagen mit einem Verdampfer und einem Wärmetauscher bekannt, der einen kleineren Bauraum als vergleichbare bekannte Verteilerkästen benötigt. Bei der vorgeschlagenen Anordnung wird immer ein Teil der aus dem Verdampfer austretenden Luft an der Klappe vorbei zum Wärmetauscher geführt. Daher ist es auch im reinen Kaltluftbetrieb nicht möglich, den Wärmetauscher so vom Kaltluftstrom abzuschirmen, daß eine Aufheizung des Kaltluftstroms verhindert wird.

Aufgabe der Erfindung ist es, einen Verteilerkasten der eingangs genannten Art zu schaffen, der bei relativ kleinem Bauraum die Aufteilung und Temperaturmischung der Luftströme auf engstem Raum ermöglicht und eine Aufheizung des Kaltluftstroms im reinen Kaltluftbetrieb sicher verhindert.

Diese Aufgabe wird erfindungsgemäß dadurch gelöst, daß die Kaltluft hinter dem Absperrorgan zunächst um den Wärmetauscher herumgeleitet wird und in diesen auf der dem Kaltlufteinlaß abgewandten Seite eintritt.

Eine solche Luftführung in einem Verteilerkasten realisiert die Temperaturmischung auf engstem Raum, da die Klappe für die Aufteilung des zugeführten Luftstroms nur einen sehr schmalen Bereich zwischen Kaltlufteinlaß und Wärmetauscher benötigt. Darüber hinaus ist der Verteilerkasten von einfacher Bauart und hoher Stabilität.

Besonders vorteilhaft ist es, wenn die Aufteilung des zugeführten Luftstroms in einen Kaltluftanteil und einen durch den Wärmetauscher zu erwärmenden Luftstromanteil durch eine zweiflügelige Drehklappe erfolgt, die zwischen den beiden Extremstellungen für Warmluft bzw. Kaltluft auf Zwischenpositionen gestellt werden kann.

Eine optimale Luftführung wird dadurch erreicht, daß im Bereich der zweiflügeligen Drehklappe zwischen der Drehklappenachse und der der Mischkammer abgewandten Seite des Wärmetauschers eine Rippe (Wand) angebracht ist, die den erwärmten Luftstrom zum Mischkammerzentrum hin ablenkt und bei beliebigen Zwischenstellungen der Drehklappe verhindert, daß der Warmluftstrom den Wärmetauscher erneut durchströmt. Dazu befindet sich zwischen der Rippe und der Drehklappenachse ein Abdichtorgan, insbesondere eine an der Klappe angespritzte Dichtlippe.

Im reinen Kaltluftbetrieb schirmt die Drehklappe den Wärmetauscher so vom Kaltluftstrom ab, daß eine Aufheizung des Kaltluftstroms verhindert wird. Hierdurch wird die Kühlleistung erhöht.

Eine günstige Ausführung wird dadurch erreicht, daß eine Nase an der Innenseite der Verteilerkastenwand den Kaltluftstrom so zum Mischkammerzentrum ablenkt, daß er in einem Winkel von etwa 50° bis 90° auf den Warmluftstrahl trifft.

Besonders vorteilhaft ist es, wenn drei zweiflügelige Drehklappen so angeordnet sind, daß die gemischte Luft mit der vom Bediener eingestellten Temperatur durch drei Luftkanäle und Ausströmer in das Fahrzeuginnere geführt wird. Die Austrittsöffnungen des Verteilerkasten sind dabei einzeln absperrbar.

Eine optimale Luftführung wird erreicht, wenn die Drehklappen und Luftaustrittsöffnungen so angeordnet sind, daß im reinen Defrostbetrieb der Warmluftstrom aus dem Wärmetauscher auf direktem Wege in den Defrosterausströmer geleitet und im reinen Kaltluftbetrieb der Kaltluftstrom auf direktem Wege in den Mannausströmer geleitet wird.

Darüber hinaus wird ein Teil des Warmluftstroms durch den Kaltluftstrom so in den Bereich Fußraumausströmer abgelenkt, daß die gewünschte Temperaturschichtung (Luftstrom aus Fußraumausströmer ist wärmer als Luftstrom aus Mannausströmer) erreicht wird.

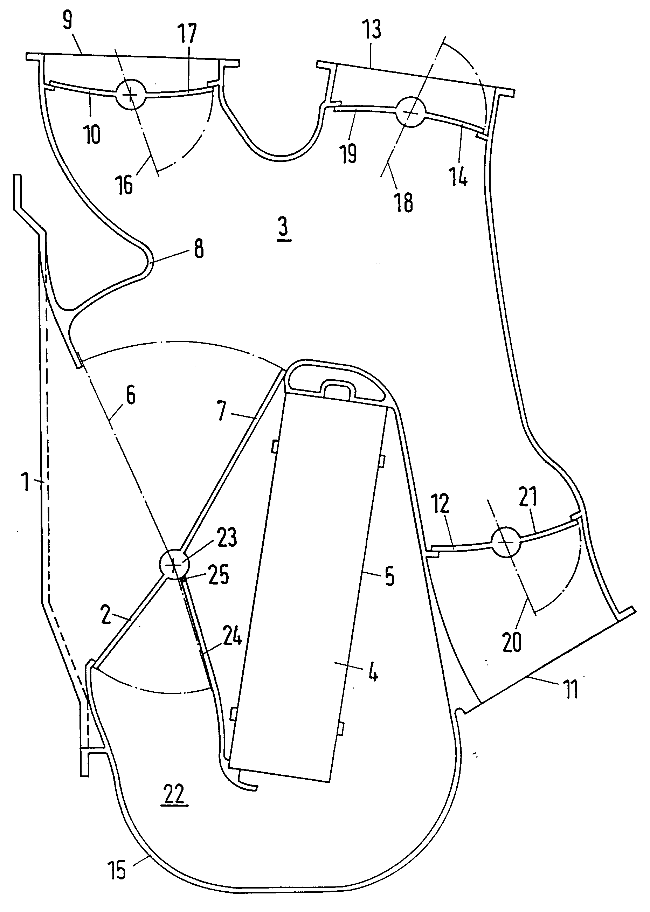

Ein Ausführungsbeispiel der Erfindung ist in der Zeichnung dargestellt und wird im folgenden näher beschrieben.

Der Verteilerkasten einer Kfz-Warmluftheizung oder einer Kfz-Klimaanlage weist ein Gehäuse 15 auf, das innerhalb eines Kfz befestigt und an Luftkanäle angeschlossen ist. Durch einen Kaltlufteinlaß 1 tritt der kalte Luftstrom in den Verteilerkasten ein und wird durch eine zweiflügelige Drehklappe 2 geregelt, die unmittelbar hinter dem Kaltlufteinlaß gelagert ist. Diese Drehklappe 2 kann zwischen den beiden Extremstellungen für Warmluft 6 und Kaltluft 7 auf beliebige Zwischenpositionen gestellt werden, um den eingehenden Luftstrom in einen Kaltluftanteil und einen durch einen Wärmetauscher 4 zu erwärmenden Luftstromanteil aufzuteilen.

Der Wärmetauscher 4 ist so in dem Verteilerkasten angeordnet, daß er zu der Ebene des Kaltlufteinlasses 1 einen Winkel von 5° bis 20°, insbesondere einen Winkel von 9° bildet. Durch die Drehklappe 2 und die Gehäusewände wird der Wärmetauscher 4 im reinen Kaltluftbetrieb (Drehklappe 2 auf Position 7) vom Kaltluftstrom abgeschirmt, so daß eine Erwärmung des Kaltluftstromes verhindert wird. Der zu erwärmende Luftstrom wird hinter der Drehklappe 2 zunächst durch einen durch die Gehäusewände gebildeten Luftkanal 22, der am Ende spitz zuläuft und mit dem Wärmetauscher 4 einen Winkel von 10° bis 30°, insbesondere einen Winkel von 19° bildet, um den Wärmetauscher 4 herumgeleitet, um diesen von der dem Kaltlufteinlaß 1 abgewandten Seite 5 her zu durchströmen.

Eine Rippe bzw. Wand 24 zwischen der Drehklappenachse 23 und der der Mischkammer 3 abgewandten Seite des Wärmetauschers 4 lenkt den erwärmten Luftstrom zum Mischkammerzentrum hin ab. Zwischen der Rippe (Wand) 24 und der Drehklappenachse 23 befindet sich ein Abdichtorgan 25, beispielsweise eine an der Klappe angespritzte Dichtlippe, das eine Zirkulation der Warmluft verhindert, so daß der erwärmte Luftstrom nicht erneut durch den Luftkanal 22 zum Wärmetauscher 4 geleitet werden kann.

Hinter dem Wärmetauscher 4 werden der Warmluftstrom und der Kaltluftstrom in einer Mischkammer 3, die sich zwischen der Drehklappe 2 und den Luftaustrittsöffnungen 9, 11, 13 befindet, vermischt. Dabei wird der Kaltluftstrom durch eine Nase 8, die nahe des Kaltlufteinlasses 1 angebracht ist, zum Mischkammerzentrum hin abgelenkt und in einem Winkel von etwa 50° bis 90° auf den Warmluftstrom gerichtet.

Die auf diese Weise gemischte Luft gelangt in der vom Bediener eingestellten Temperatur durch die Luftaustrittsöffnungen 9, 11, 13 in die verschiedenen Bereiche des Fahrgastraumes des Kfz.

Vor der Luftaustrittsöffnung 9 für den Defrostausströmer ist eine zweiflügelige Drehklappe 10 angebracht, die die Luftzufuhr zur Windschutzscheibe zwischen den Extremstellungen 16 (geöffnet) und 17 (verschlossen) reguliert. Im reinen Defrostbetrieb (Drehklappe 2 auf Position 6 und Drehklappe 10 auf Position 16) wird der warme Luftstrom auf direktem Wege aus dem Wärmetauscher 4 durch die Luftaustrittsöffnung 9 in den Defrostausströmer geleitet.

Vor der Luftaustrittsöffnung 13 für den Mannausströmer ist eine zweiflügelige Drehklappe 14 angebracht, die die Luftzufuhr zum Mannausströmer, der sich beispielsweise in der Schalttafel befindet, zwischen den Extremstellungen 18 (geöffnet) und 19 (verschlossen) reguliert. Im reinen Kaltluftbetrieb (Drehklappe 2 auf Position 7 und Drehklappe 14 auf Position 18) wird der kalte Luftstrom auf direktem Wege aus dem Kaltlufteinlaß 1 durch die Luftaustrittsöffnung 13 in den Mannausströmer geleitet.

Vor der Luftaustrittsöffnung 11 für den Fußraumausströmer ist eine zweiflügelige Drehklappe 12 angebracht, die die Luftzufuhr in den Fußraum der Fahrgastzelle zwischen den Extremstellungen 20 (geöffnet) und 21 (verschlossen) reguliert.

Die Drehklappen 14 und 12 sind so angeordnet, daß neben der Luftvermischung ein Teil des Warmluftstroms durch den Kaltluftstrom so in den Bereich Fußraumausströmer abgelenkt wird, daß sich die gewünschte Temperaturschichtung einstellt, bei der der Luftstrom aus dem Fußraumausströmer wärmer ist als der Luftstrom aus dem Mannausströmer.

## Patentansprüche

1. Verteilerkasten für eine Warmluftheizung oder eine Klimaanlage eines Kfz mit einem Kaltlufteinlaß (1), von dem die Kaltluft zu einem Absperrorgan (2), insbesondere einer Klappe geführt ist, das die Kaltluft in zwei Luftströme teilt, von denen einer direkt zu einer Mischkammer (3) und der andere zu einem Wärmetauscher (4) geführt ist, der die Kaltluft anwärmt, wobei die angewärmte Luft hinter dem Wärmetauscher (4) in die Mischkammer (3) geführt ist,
**dadurch gekennzeichnet,**
daß die Kaltluft hinter dem Absperrorgan (2) zunächst um den Wärmetauscher (4) herumgeleitet wird und in diesen auf der dem Kaltlufteinlaß abgewandten Seite (5) eintritt.

2. Verteilerkasten nach Anspruch 1, **dadurch gekennzeichnet,**
daß die Aufteilung des zugeführten Luftstroms in einen Kaltluftanteil und einen durch den Wärmetauscher (4) zu erwärmenden Luftstromanteil durch eine zweiflügelige Drehklappe (2) erfolgt, die zwischen den beiden Extremstellungen für Warmluft (6) bzw. Kaltluft (7) auf Zwischenpositionen stellbar ist.

3. Verteilerkasten nach Anspruch 2, **dadurch gekennzeichnet,**
daß zwischen der der Mischkammer (3) abgewandten Seite des Wärmetauschers (4) und der Drehklappenachse (23) eine Rippe (Wand) (24) mit einem Abdichtorgan (25) sich befindet, die den angewärmten Luftstrom zum Mischkammerzentrum (3) hin ablenkt.

4. Verteilerkasten nach einem der vorherigen Ansprüche, **dadurch gekennzeichnet,**
daß der Wärmetauscher (4) durch das Absperrorgan (2) so vom Kaltluftstrom abschirmbar ist, daß eine Aufheizung des Kaltluftstroms im reinen Kaltluftbetrieb verhindert wird.

5. Verteilerkasten nach einem der vorherigen Ansprüche, **dadurch gekennzeichnet,**
daß nahe dem Kaltlufteinlaß (1) an der Kastenwandinnenseite eine Nase (8) sich befindet, die den Kaltluftstrom zum Mischkammerzentrum (3) hin ablenkt und in einem Winkel von etwa 50° bis 90° auf den Warmluftstrom richtet.

6. Verteilerkasten nach Anspruch 5, **dadurch gekennzeichnet,**
daß nahe der Nase (8) eine zweite zweiflügelige Drehklappe (10) sich befindet, durch die im reinen Defrostbetrieb der Warmluftstrom aus dem Wärmetauscher (4) auf direktem Wege in den Defrosterausströmer geleitet wird.

7. Verteilerkasten nach Anspruch 6, **dadurch gekennzeichnet,**
daß nahe des Wärmetauschers (4) auf der dem Kaltlufteinlaß (1) abgewandten Seite eine dritte zweiflügelige Drehklappe (12) angebracht ist, durch die die vermischten Luftströme in den Fußraumausströmer geleitet werden.

8. Verteilerkasten nach Anspruch 7, **dadurch gekennzeichnet,**
daß eine vierte zweiflügelige Drehklappe (14) zwischen der zweiten und dritten Drehklappe (10,12) angeordnet ist, durch die im reinen Kaltluftbetrieb der Kaltluftstrom auf direktem Wege in den Mannausströmer geleitet wird.

## Claims

1. A distribution box for a warm-air heating system or an air conditioning system for a motor vehicle having a cold air inlet (1), from which the cold air is conveyed to a shut-off device (2), in particular a swing valve, which divides the cold air into two air streams, one of which is conveyed directly to a mixing chamber (3) and the other to a heat exchanger (4), which heats the cold air, with the heated air being conveyed behind the heat exchanger (4) into the mixing chamber (3),
**characterised in that** behind the shut-off device (2) the cold air is conveyed firstly around the heat exchanger (4) and enters into it on the side (5) remote from the cold air inlet.

2. A distribution box according to claim 1,
**characterised in that** the division of the supplied air stream into a cold air portion and an air stream portion to be heated by the heat exchanger (4) is performed by a two-blade swing valve (2), which can be set to intermediate positions between the two extreme positions for warm air (6) and cold air (7) respectively.

3. A distribution box according to Claim 2,
**characterised in that** located between the side of the heat exchanger (4) remote from the mixing chamber (3) and the swing valve axis (23) is a rib (wall) (24) having a sealing device (25), which diverts the heated air stream to the mixing chamber centre (3).

4. A distribution box according to one of the preceding Claims,
**characterised in that** the heat exchanger (4) can be screened by the shut-off device (2) from the cold air stream so that a heating of the cold air stream is prevented in the completely cold air operation.

5. A distribution box according to one of the preceding Claims,
**characterised in that** situated next to the cold air inlet (1) at the inner side of the box wall is a protuberance (8), which diverts the cold air stream to the mixing chamber centre (3) and directs it at an angle of roughly 50° to 90° to the warm air stream.

6. A distribution box according to Claim 5,
**characterised in that** situated close to the protuberance (8) is a second two-blade swing valve (10), by which in completely defrosting operation the stream of warm air is conveyed out of the heat exchanger (4) directly into the defroster vent.

7. A distribution box according to Claim 6,
**characterised in that** mounted close to the heat exchanger (4) on the side remote from the cold air inlet (1) is a third two-blade swing valve (12), by which the mixed air streams are conveyed into the footroom vent.

8. A distribution box according to Claim 7,
**characterised in that** a fourth two-blade swing valve (14) is disposed between the second and third swing valves (10, 12), by which in completely cold-air operation the stream of cold air is conveyed directly into the face-level vent.

## Revendications

1. Boîte de distribution pour un système de chauffage à l'air chaud ou un système de climatisation d'un véhicule automobile, comportant une entrée d'air froid (1) d'où l'air froid est conduit à un organe obturateur (2), en particulier un volet, qui divise l'air froid en deux courants dont l'un est conduit directement à une chambre de mélange (3) et l'autre conduit à un échangeur de chaleur (4) qui chauffe l'air froid, l'air chauffé étant conduit après l'échangeur de chaleur (4) à la chambre de mélange (3), caractérisée par le fait que l'air froid, après l'organe obturateur (2), commence par contourner l'échangeur de chaleur (4) et entre dans celui-ci sur le côté (5) opposé à l'entrée d'air froid.

2. Boîte de distribution selon la revendication 1, caractérisée par le fait que le partage du courant d'air entrant en une partie air froid et une partie à chauffer par l'échangeur de chaleur (4) est produit par un volet rotatif à deux ailes (2) qui peut être mis dans des positions intermédiaires entre les deux positions extrêmes pour air chaud (6) et air froid (7).

3. Boîte de distribution selon la revendication 2, caractérisée par le fait qu'entre le côté de l'échangeur de chaleur (4) opposé à la chambre de mélange (3) et l'axe (23) du volet rotatif se trouve une nervure (paroi) (24) qui comporte un organe d'étanchéité (25) et dévie le courant d'air chauffé vers le centre de la chambre de mélange (3).

4. Boîte de distribution selon l'une des revendications précédentes, caractérisée par le fait que l'échangeur de chaleur (4) peut être protégé du courant d'air froid par l'organe obturateur (2) de façon qu'en service air froid pur ne se produise pas de chauffage du courant d'air froid.

5. Boîte de distribution selon l'une des revendications précédentes, caractérisée par le fait que près de l'entrée d'air froid (1) se trouve sur le côté intérieur de la paroi de la boîte un nez (8) qui dévie le courant d'air froid vers le centre de la chambre de mélange (3) et le dirige sur le courant d'air chaud sous un angle d'environ 50° à 90°.

6. Boîte de distribution selon la revendication 5, caractérisée par le fait que près du nez (8) se trouve un deuxième volet rotatif à deux ailes (10) qui, en service dégivrage pur, envoie le courant d'air chaud de l'échangeur de chaleur (4) à la buse de dégivrage par une voie directe.

7. Boîte de distribution selon la revendication 6, caractérisée par le fait que près de l'échangeur de chaleur (4) est placé sur le côté opposé à l'entrée d'air froid (1) un troisième volet rotatif à deux ailes (12) qui envoie les courants d'air mélangés à l'aérateur inférieur.

8. Boîte de distribution selon la revendication 7, caractérisée par le fait qu'entre les deuxième et troisième volets rotatifs (10, 12) est placé un quatrième volet rotatif à deux ailes (14) qui, en service air froid pur, envoie le courant d'air froid à l'aérateur supérieur par une voie directe.
